# EUROPEAN PATENT APPLICATION

(11) **EP 4 050 459 A1**
(43) Date of publication of application: **31.08.2022**
(21) Application number: 21159005.4
(22) Date of filing: 24.02.2021
(51) Int. Cl.: G06F 3/01, G01C 21/16, G01S 19/43

(54) **CALIBRATION OF A DISPLAY DEVICE**

(71) Applicant: V-Labs SA, 1228 Plan-les-Ouates (CH)
(72) Inventor: Cohen Stuart, Diemer, 1228 Plan-les-Ouates (CH); Curina, Michele, 1228 Plan-les-Ouates (CH)
(74) Representative: KATZAROV S.A.

(57) **Abstract**

The present relates to a computer implemented method for calibrating a display device in a geographical reference system, said display device being configured to be placed on the head of a user so that said user views an external environment through the display device. The display device is configured for overlaying virtual environment on top of the user view as seen through said display.

The invention further relates to a system for displaying a virtual environment based on the computer implemented method according to the present invention.

## Description

### Technical Field

The present invention relates to computer implemented method for calibrating of a display device and to a method for computing coordinates of a point in the absolute geographical system by using a display device calibrated by the method according to the present invention.

The invention also concerns a system for displaying a virtual environment.

### Background of the art

Augmented Reality (also called Mixed Reality - AR/MR) overlays 2D/3D/ virtual content on top of the user view of the world as seen through a transparent screen (corresponding to the real world or "reality"). Generally, the transparent screen corresponds to glasses carried by the user.

In order for Augmented Reality to work as expected, the virtual content needs to remain in the same position ("locked") relative to the reality when the user moves around. Otherwise, the augmented or mixed reality created by the device will not be perceived as credible by the user.

This means that the device has to know its position in the real world at any moment in time, allowing it to keep the virtual content in place.

Various approaches have been developed to achieve this goal, including a technique called "SLAM" (Simultaneous Localization And Mapping). SLAM allows the Augmented Reality device to know its position in the real world and keep the virtual content in the correct position.

The SLAM algorithms used by augmented reality devices, in particular mobile devices and headsets, evaluate the position based on landmarks that are defined as features of the environment, such as corners, colors, etc...

Landmarks are generally obtained from relative sensors mounted on the device, such as cameras and inertial measurement unit (IMU) sensors. Since the measured landmarks contain small errors on their position, the more landmarks that are used, the larger the error on the location of the virtual content. This error is called drift. Depending on the environment and the movement of the device, this error can become quite large.

Augmented reality has been implemented for many applications, including for accurate visualization of geospatial data. For instance, glasses equipped with augmented reality allow operators to see the virtual location of underground infrastructures, such as the grids for water, gas, electricity, sewage and telecommunications.

However, when augmented reality is used for work where precision is required, drift can significantly reduce the positional accuracy of the virtual data, rendering the technology useless for that type of work. The positional error caused by drift can easily range from centimeters to several meters and generally increases when the user moves around. Especially in outdoor environments, it is hard to control the error based on Simultaneous Localization And Mapping - SLAM- algorithms.

Therefore, the drift (error) needs to be eliminated, or, if that is not possible, it needs to be limited to a fixed value that is acceptable for the work for which the Augmented Reality solution is used.

Various approaches have been studied to remove or at least control the drift in Augmented Reality devices.

However, none of the existing devices or methods provide a satisfying solution to significantly limit or eliminate the drift.

### Summary of the invention

The above problems are solved by the device and the method according to present invention.

In a first aspect, the present invention concerns a computer implemented method for calibrating a display device in a geographical reference system, said display device being configured to be placed on the head of a user so that said user views, for instance an external environment, through the display device,
said display device being configured for overlaying virtual environment on top of the user view as seen through said display,
the method comprising:
- i) computing a first pose of the display device at a first location L1 at a first time T1, the first pose comprising a first absolute pose and a first relative pose determined simultaneously,
   - each pose comprising the position of the display device and the orientation of the display device,
   - each absolute pose being based on satellite coordinates;
   - each relative pose being determined by the display device in the virtual environment;
- ii) displacing the display device to a second location L2 spaced from the first position L1 by a determined distance;
- iii) computing a second pose of the display device at the second location L2 at a second time T2, the second pose comprising a second absolute pose and a second relative pose determined simultaneously;
- iv) computing
   - an absolute vector between the first absolute position and the second absolute position, said absolute vector being determined by a difference of absolute positions between the first position L1 and the second position L2, and a difference of absolute orientations between the first position L1 and the second position L2, and
   - a relative vector between the first relative position L1 and the second relative position L2, said relative vector being determined by a difference of relative positions between the first position L1 and the second position L2, and a difference of relative orientations between the first position L1 and the second position L2;
   - each vector comprises a magnitude and a direction;
- v) comparing the magnitudes and the directions of the absolute vector *versus* the relative vector;
- vi) calibrating the display device (7,8) if there is a mismatch between the magnitudes and/or the directions of the absolute vector *versus* the relative vector so that the second relative pose corresponds to the second absolute pose.

In the present invention, the calibration of the device is based on poses, namely on one hand the position and the other hand the orientation of the display device. It is advantageous to use poses instead of single position since it allows to take into account the orientation of the display device upon calibration.

The position is preferably a geolocated position comprising for instance the longitude, latitude and altitude of the display device. The orientation relates preferably to an angle between the display device and a fixed direction, for instance the true north.

The poses are determined in two reference frames or two coordinate systems, namely an absolute one and a relative one. The absolute reference frame or coordinate system could be a geographic coordinate system obtained through a GNSS receiver (Global Navigation Satellite System), a UWB (Ultra Wide Band) positioning system, an Optical positioning system or Indoor Positioning System (IPS). More generally it could be any reference frame used by a positioning system. The relative reference frame or coordinate system is determined from the orientation of the device when the method is started by a user.

In each reference frame, two poses are determined to compute a ratio or difference between the positions and the orientations in each reference frame. A first pose is determined at a first position and a second pose is determined a second location. The display device is displaced between the first position L1 and the second position L2, the distance between position L2 and position L1 is controlled or determined. For instance, the determined distance is comprised between about 0.1 meters and about 100 meters, preferably between about 0.2 meters and about 50 meters, more preferably between about 0.3 meters and about 25 meters, more preferably between about 0.4 meters and about 15 meters, more preferably between about 0.5 meters and about 10 meters, more preferably between about 1 meter and 5 meters, more preferably between about 1 meter and 3 meters, for instance 3 meters.

Advantageously, the following ratios or differences are computed for the absolute poses:
- A difference of absolute positions to determine a magnitude or length of the absolute vector between the first absolute position and the second absolute position;
- A difference of absolute orientation to determine the angular difference or direction of the absolute vector between the first absolute orientation and the second absolute orientation;

Regarding the relative position, the following ratios or differences are computed:
- A difference of relative positions to determine a magnitude or length of the relative vector between the first relative position and the second relative position;
- A difference of relative orientation to determine the angular difference or orientation between the first relative orientation and the second relative orientation;

The calibration of the device is based on the comparison the computed absolute ratios (or difference) *versus* the computed relative ratios (or difference). The device is calibrated by comparing the absolute vector and the relative vectors to determine if said vectors are equal or unequal. The point in this comparison step is to compare the positions and the orientations of the display device determined in the absolute reference frame and the relative reference frame. The goal of the calibration is to calibrate, i.e. to correct, the relative data (relative position and relative orientation) of the display device based on absolute data (the position and the orientation) from the absolute reference frame.

Advantageously, the calibration process of the position of the display device is the following:
- the absolute position between L2 and L1 is compared with the relative position between L2 and L1 , and
- if the positions are unequal, i.e. the vectors are unequal (for instance the magnitudes and/or the direction), the relative position L2 is corrected based on the absolute position L2 so that the relative position L2 corresponds to the absolute position L2.

Advantageously, for the calibration process of the orientation of the display device the reasoning is similar to the one above for the positions and is the following:
- the absolute orientation (or angular orientation or direction) is compared with the relative orientation at L2, and
- if the orientations (or angular orientation or direction) are unequal, i.e. the vectors are unequal, the relative orientation at L2 is corrected based on the absolute orientation at position at L2 so that the relative orientation at position L2 corresponds to the absolute orientation at position L2.

Advantageously, the present invention combines the data or readings from the absolute reference frame with the ones of the relative reference frame to remove or minimize the drift.

For instance, the present invention allows to achieve a centimeter accuracy (position), notably position's best accuracy (or maximum accuracy) comprised between 0 cm (zero) and 10 cm.

For instance, the present invention allows to achieve an orientation's accuracy with a best accuracy comprised between 0 (zero) and 3 degrees.

In a preferred embodiment, the absolute pose of the display device is determined by using two antennas coupled to the display device, for instance mechanically coupled or coupled by mechanical means. This allows to instantly know the bearing angle (i.e. orientation or direction) of the display device, preferably the angle with the true north. Preferably, in order to increase the accuracy of the bearing angle, the antennas should be placed as far away as possible on of the other.

The antennas are either directly coupled to the display device or coupled to a mobile support on which the display device is mounted. This is achieved for example by positioning 2 antennas respectively on the right side and left side of a hard hat on which the display device is mounted.

Advantageously, the method further comprises:
- vii) repeating the preceding steps i) to vi) by using said second absolute pose as a new first absolute pose.
This allows to continuously minimize the drift of the virtual content displayed on the display device.

In a preferred embodiment, the method further comprises:
- viii) Repeating step vii)
Advantageously, the time or duration between two calibration cycles (i.e. corresponds to the steps of the method) is based on the determined distance at which the device was displaced. In other words, the distance walked by a user carrying the device determines when the display device is recalibrated. Preferably, a calibration cycle is run each time the display device is displaced on the determined distance.

Advantageously, each absolute pose comprises the position of the display and the orientation of the display device relative to the true north.

In a preferred embodiment, each absolute pose is computed by a computation module arranged for processing satellite coordinates (or other positioning systems coordinates), for instance a GNSS/RTK receiver.

Advantageously, in an embodiment the computation module is coupled to at least two antennas attached to the display device for receiving satellite coordinates.

In a second aspect, the present invention relates to a system for displaying a virtual environment, the system comprising
- a display arranged for being be placed on the head of a user so that said user views through the display device, said display device being configured for overlaying virtual environment on top of the user views as seen through said display,
- a computation module configured for computing at least an absolute pose of the display device based on satellite data,
- the computation module being further configured for computing at least a relative pose of said display device to position the display device in the virtual environment displayed on the display device,
the system being characterized in that the computation module is configured for computing
- an absolute vector between the first absolute position and the second absolute position, said absolute vector being determined by a difference of absolute positions between the first position L1 and the second position L2, and a difference of absolute orientations between the first position L1 and the second position L2, and
- a relative vector between the first relative position L1 and the second relative position L2, said relative vector being determined by a difference of relative positions between the first position L1 and the second position L2, and a difference of relative orientations between the first position L1 and the second position L2;
- each vector comprises a magnitude and a direction;
and comparing the magnitudes and the directions of the absolute vector *versus* the relative vector;
so as to calibrate the display device if there is a mismatch between the magnitudes and/or the directions of the absolute vector *versus* the relative vector so that the second relative pose corresponds to the second absolute pose.

Advantageously, the computation module is embedded in the display device. Alternatively, the computation module is outside the display device. For instance, the computation module is installed or embedded in a distinct device configured for operating a computation module, for instance in a smartphone.

In a preferred embodiment, the system further comprises a mobile support, said display device being mounted on said mobile support, for instance a hardhat, frame in particular frame for eyeglass or optical frame, a mobile support arranged for being placed on the head of a user.

Advantageously, in an embodiment the system further comprises two antennas attached to the display device for receiving satellite coordinates (or other positioning systems coordinates).

In a preferred embodiment, the system further comprises a computation module arranged for processing satellite coordinates, for instance a receiver.

Advantageously, the computation module and the display are connected by a wireless connection, for instance a wifi network.

In a third aspect, the invention relates to a method, preferably a computer implemented method, for computing the coordinates of a point in the absolute reference system :
- Providing a display device being configured to be placed on the head of a user so that said user views through the display device, said display device being configured for overlaying virtual environment on top of the user view as seen through said display,
- Calibrating the display device by applying the method of calibration according to the present invention;
- Targeting a point in the physical world with a visual indicator displayed on the display device, and when the visual indicator points on said point, an absolute coordinate of the object is determined at said point;

Advantageously, the display device calibrated by the method according to the present invention can be used to measure an object, for instance a length, an area or a volume of said object when several points of a same object are computed by the method for computing according to the present invention. Preferably the measuring is carried out by the computation module.

Once the display is calibrated, the virtual position pointed by the visual indicator displayed on the displayed device matches the absolute position in the geographical reference system.

Advantageously, the precision of the measuring method has at best an accuracy corresponding to the best accuracy of the calibration method.

Preferably, the best (or maximum) accuracy comprised between 0 cm and 10 cm.

In the present invention, the term "calibrating" means adjusting or correcting the relative position of the display device to remove the drift.

In the present invention, the terms geographical reference system or geographical coordinate system refer to an external environment, preferably on earth, into which the display device is placed.

The particular advantages of the system are similar to the ones of the methods of the invention and will thus not be repeated here.

The embodiments describe for the methods also apply to the system according to the present invention mutatis mutandis.

### Brief description of the drawings

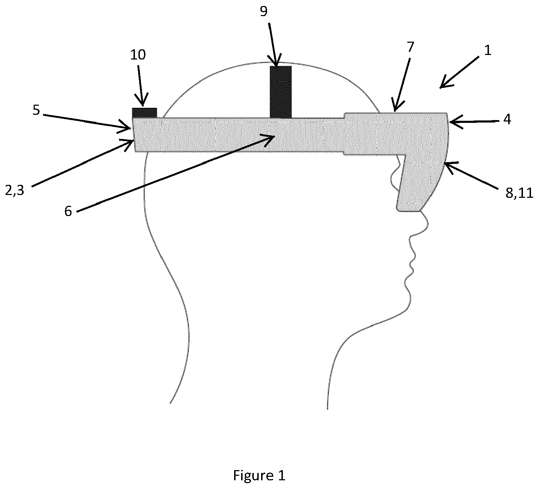

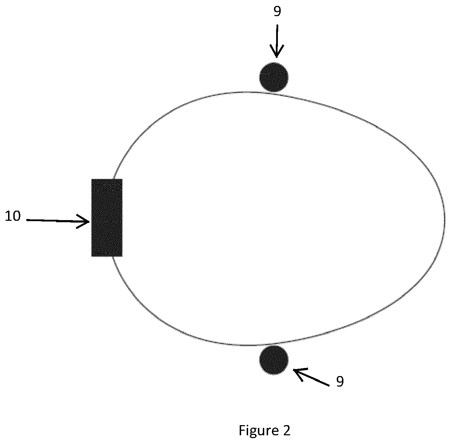

Further particular advantages and features of the invention will become more apparent from the following non-limitative description of at least one embodiment of the invention which will refer to the accompanying drawings, wherein
- Figures 1 and 2 illustrate a first embodiment of the system according to the present invention;

### Detailed description of the invention

The present detailed description is intended to illustrate the invention in a non-limitative manner since any feature of an embodiment may be combined with any other feature of a different embodiment in an advantageous manner.

Figures 1,2 illustrate a first embodiment of the system 1 according to the present invention.

The system 1 comprises a mobile support 2 on which the various components constituting the system 1 are fixed.

In the embodiment illustrated on figures 1,2 is an optical frame 3 designed to be placed on the head of a user like glasses, in other words around the head of the user. The optical frame 3 has an annular shaped designed for surrounding the head of the user. The optical frame 3 comprises a front part 4 and a back part 5 that are connected one another by lateral sides 6. The front part 4 contacting the face whereas the back part 5 contact the back of the head when the optical frame 3 is worn by a user.

In another embodiment (not shown on figures) the mobile support 2 is a hat, in particular a hardhat.

A display device 7 mounted on the front part 4 of the optical frame 3. In this embodiment, the display device 7 is constituted by glasses 8 or pair of glasses so that the user wearing the optical frame 3 views the external environment through the glasses 8, i.e. a head mounted display. The glasses 8 are configured for overlaying virtual environment on top of the user views as seen through said glasses 8.

The system 1 further comprises two antennas 9 mounted on the optical frame 3, one each lateral side 6, for receiving satellites coordinates, here GNSS antennas 9. The satellites coordinates are processed by a receiver 10 mounted on the back part 5 of the optical frame 3 and connected with the antennas 9. The receiver 10 is here a GNSS/RTK receiver 10.

The system 1 further comprises a computation module 11 mounted in the glasses. Alternatively, in another embodiment (not shown), the computation module is outside the glasses, for instance mounted on the optical frame in the back of the head's user. The computation module 11 is configured to determine a virtual pose of the glasses 8, in other words the position and orientation of the glasses 8 in the virtual environment.

The computation module 11 is connected with the receiver 10 to compute absolute pose of the glasses 8, in other words the position and orientation of the glasses 8 in the "real world", such as position and orientation in a geographical coordinate system.

Figure 2 is a chart illustrating a first embodiment of the method according to the present invention.

The method describes on figure 2 uses the system 1 illustrated on figures 1 and 2. The system 1 is placed on the head of a user so that the user views through the glasses 8. The glasses 8 are configured for overlaying virtual environment on top of the user view as seen through glasses 8.

The steps of the method are programmed in a software executed by the system 1.

The glasses 8 and the receiver 10 are connected on a same network, for instance on a same wifi network created by a smartphone hot spot.

The user carrying the glasses 8 (i.e. the system 1) is placed at a first location L1 at a time T1:
- The computation module 11 of the system 1 computes a first relative pose : a first relative position and a first relative orientation (these coordinates are preferably determined automatically by the software);
- The receiver 10 sends the longitude, latitude and altitude received by the antennas 9 to the computation module of the glasses 8;
- The computation module 11 of the system 1 computes a first absolute pose: a first absolute position and a first absolute orientation;

The user carrying the glasses walks a determined distance, for instance about 1.5 meters, to reach a second location L2 at a time T2:
- The computation module 11 of the system computes a second relative position and a second relative orientation;
- The receiver 10 sends another set of coordinates comprising the longitude, latitude and altitude received by the antennas 9 to the computation module 11 of the glasses 8;
- The computation module 11 of the system 1 computes a second absolute pose: a second absolute position and a second absolute orientation;

The computation module 11 then calculates the differences between respectively on one hand the first and second absolute pose and on the other hand the first and second relative pose.

The point of this step is to compute:
- an absolute vector between the first absolute position and the second absolute position, said absolute vector being determined by a difference of absolute positions between the first position L1 and the second position L2, and a difference of absolute orientations between the first position L1 and the second position L2, and
- a relative vector between the first relative position L1 and the second relative position L2, said relative vector being determined by a difference of relative positions between the first position L1 and the second position L2, and a difference of relative orientations between the first position L1 and the second position L2;

The computed absolute vector and the relative vector are then compared to determine if they are equal or unequal. Advantageously,
- the magnitudes of the absolute vector *versus* the relative vector are compared; and/or
- and the directions of the absolute vector *versus* the relative vector are compared.

The results of the comparison is used to calibrate the glasses (i.e. display device) if there is a mismatch between the magnitudes and/or the directions of the absolute vector versus the relative vector so that the second relative pose corresponds to the second absolute pose.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example is particularly the case regarding the different apparatuses which can be used.

### REFERENCE NUMBERS

- 1: System according to a first embodiment
- 2: Mobile support
- 3: Optical frame
- 4: Front part
- 5: Back part
- 6: Lateral side
- 7: Display device
- 8: Glasses
- 9: GNSS antennas
- 10: RTK receiver
- 11: Computation module

## Claims

1. Computer implemented method for calibrating a display device (7,8) in a geographical reference system, said display device (7,8) being configured to be placed on the head of a user so that said user views through the display device (7,8),
said display device (7,8) being configured for overlaying virtual environment on top of the user view as seen through said display device (7,8),
the method comprising:
- i) computing a first pose of the display device (7,8) at a first location L1 at a first time T1, the first pose comprising a first absolute pose and a first relative pose determined simultaneously,
- each pose comprising the position of the display device (7,8) and the orientation of the display device (7,8),
- each absolute pose being based on satellite coordinates;
- each relative pose being determined by the display device (7,8) in the virtual environment;
- ii) displacing the display device (7,8) to a second location L2 spaced from the first position L1 by a determined distance;
- iii) computing a second pose of the display device at the second location L2 at a second time T2, the second pose comprising a second absolute pose and a second relative pose determined simultaneously;
- iv) computing
- an absolute vector between the first absolute position and the second absolute position, said absolute vector being determined by a difference of absolute positions between the first position L1 and the second position L2, and a difference of absolute orientations between the first position L1 and the second position L2, and
- a relative vector between the first relative position L1 and the second relative position L2, said relative vector being determined by a difference of relative positions between the first position L1 and the second position L2, and a difference of relative orientations between the first position L1 and the second position L2;
- each vector comprises a magnitude and a direction;
- v) comparing the magnitudes and the directions of the absolute vector *versus* the relative vector;
- vi) calibrating the display device (7,8) if there is a mismatch between the magnitudes and/or the directions of the absolute vector *versus* the relative vector so that the second relative pose corresponds to the second absolute pose.

2. Method according to claim 1, wherein the method further comprises:
vii) repeating the preceding steps i) to vi) by using said second absolute pose as a new first absolute pose.

3. Method according to claim 1 or 2, wherein a calibration cycle is run each time the display device (7,8) is displaced on the determined distance.

4. Method according to any one of claims 1 to 3, wherein each absolute pose comprising the position of the display (7,8) and the orientation of the display device (7,8) relative to the true north.

5. Method according to any one of claims 1 to 4, wherein each absolute pose is computed by a computation module (11) arranged for processing satellite coordinates, for instance a receiver (10).

6. Method according to any one of claims 1 to 5, wherein the absolute pose of the display device (7,8) is determined by using two antennas (9) coupled to the display device (7,8).

7. Method according to any one of claims 1 to 6, wherein said determined distance is comprised between about 0.1 meters and about 100 meters, preferably between about 0.2 meters and about 50 meters, more preferably between about 0.3 meters and about 25 meters, more preferably between about 0.4 meters and about 15 meters, more preferably between about 0.5 meters and about 10 meters, more preferably between about 1 meter and 5 meters, more preferably between about 1 meter and 3 meters, for instance 3 meters.

8. Method for computing coordinates of a point in the absolute geographical system, the method comprising:
- Providing a display device (7,8) being configured to be placed on the head of a user so that said user views through the display device (7,8), said display device (7,8) being configured for overlaying virtual environment on top of the user view as seen through said display (7,8),
- Calibrating the display device (7,8) by applying the method of calibration according to any one of claim 1 to 7;
- Targeting a point in the physical world with a visual indicator displayed on the display device (7,8), and when the visual indicator points on said point an absolute coordinate of the point is determined;

9. System (1) for displaying a virtual environment, the system comprising
- a display device (7,8) arranged for being be placed on the head of a user so that said user views through the display device (7,8), said display device (7,8) being configured for overlaying virtual environment on top of the user views as seen through said display device (7,8),
- a computation module (11) configured for computing at least an absolute pose of the display device (7,8) based on satellite data,
- the computation module (11) being further configured for computing at least a relative pose of said display device (7,8) to position the display device (7,8) in the virtual environment displayed on the display device (7,8),
the system (1) being **characterized in that** the computation module (11) is configured for computing
- an absolute vector between the first absolute position and the second absolute position, said absolute vector being determined by a difference of absolute positions between the first position L1 and the second position L2, and a difference of absolute orientations between the first position L1 and the second position L2, and
- a relative vector between the first relative position L1 and the second relative position L2, said relative vector being determined by a difference of relative positions between the first position L1 and the second position L2, and a difference of relative orientations between the first position L1 and the second position L2;
- each vector comprises a magnitude and a direction;
and comparing the magnitudes and the directions of the absolute vector *versus* the relative vector;
so as to calibrate the display device (7,8) if there is a mismatch between the magnitudes and/or the directions of the absolute vector *versus* the relative vector so that the second relative pose corresponds to the second absolute pose.

10. System (1) according to claim 9, wherein the system (1) further comprises a mobile support (2), said display device (7,8) being mounted on said mobile support (2).

11. System (1) according to claim 10, wherein the mobile support (2) is chosen among the list comprising a hat, a hard hat, frame in particular frame for eyeglass or optical frame (3), a mobile support (2) arranged for being placed on the head of a user.

12. System (1) according to any one of claims 9 to 11, wherein the system (1) further comprises two antennas (9) attached to the display device (7,8) for receiving satellite coordinates.

13. System (1) according to any one of claims 9 to 12, wherein the system (1) further comprises a receiver (10) arranged for processing satellite coordinates.

14. Computer program comprising instructions which, when the program is executed by a computer, cause the computer to carry out the method according to any one of claims 1 to 8.

15. Storage medium, for instance a server, for storing a computer program according to the preceding claim.
